# FASCICULE DE BREVET EUROPEEN

(11) **EP 1 958 202 B1**
(45) Date de publication et mention de la délivrance du brevet: **26.09.2012**
(21) Numéro de dépôt: 06819824.1
(22) Date de dépôt: 29.11.2006
(51) Int. Cl.: G11B 27/034, G11B 27/34, H04N 5/76

(54) **PROCEDE D'IDENTIFICATION D'UN DOCUMENT ENREGISTRE PAR AFFICHAGE ET SELECTION D'IMAGES CLEFS, ET RECEPTEUR ASSOCIE**
VERFAHREN ZUM IDENTIFIZIEREN EINES VON EINEM DISPLAY AUFGEZEICHNETEN DOKUMENTS, AUSWAHL VON SCHLÜSSELBILDERN UND DIESBEZÜGLICHER REZEPTOR
METHOD FOR IDENTIFYING A DOCUMENT RECORDED BY A DISPLAY, SELECTION OF KEY IMAGES AND AN ASSOCIATED RECEPTOR

(30) Priorité: 08.12.2005 FR 0553775
(43) Date de publication de la demande: 20.08.2008
(73) Titulaire: Thomson Licensing, 92130 Issy-les-Moulineaux (FR)
(72) Inventeur: CHEVALLIER, Louis, F-35520 La Mezière (FR); OISEL, Lionel, F-35137 La Nouaye (FR); VIGOUROUX, Jean-Ronan, F-35000 Rennes (FR)
(74) Mandataire: Rossmanith, Manfred
(86) Numéro de dépôt international: PCT/EP2006/069036
(87) Numéro de publication internationale: WO 2007/065818

(56) Documents cités:
- EP-A- 0 638 861
- EP-A- 1 377 047
- EP-A- 1 515 552
- EP-A- 1 530 216
- US-B1- 6 321 024
- US-B1- 6 591 058

## Description

La présente invention concerne un procédé d'identification d'un document audiovisuel enregistré dans un récepteur en affichant et en sélectionnant des images clefs, et l'appareil apte à mettre en oeuvre le procédé.

L'invention est applicable notamment dans les systèmes où un ensemble d'informations telle qu'une émission audiovisuelle est mise à la disposition d'un utilisateur à la suite d'un enregistrement. Un des systèmes les plus connus sont les lecteurs enregistreur de documents (appelés PVR en anglais : Personnal Video Recorder). Les PVR sont généralement équipés de disque dur permettant d'enregistrer au moins une dizaine d'heures de contenu audiovisuel sous forme compressé. Avec un disque de 80 Gigaoctets, on peut ainsi enregistrer plus de 40 heures de contenus audiovisuels environ. D'autres supports de mémorisation sont également envisageables comme la cassette d'un magnétoscope, ou un disque magnéto-optique.

L'invention est applicable notamment aux systèmes permettant de lire successivement, en série, les informations d'un enregistrement.

En règle générale, les contenus audiovisuels des PVR sont téléchargés d'un réseau de diffusion unidirectionnel. Des menus affichés permettent aux utilisateurs d'être informés des documents audiovisuels qui seront disponibles sur le réseau à plus ou moins brèves échéances. Le menu affiché comporte au moins un identificateur du document, généralement son titre, la tranche horaire au cours de laquelle ce document est diffusé par le réseau, et un identifiant du canal de diffusion. Si l'utilisateur prévoit d'être absent au moment de la diffusion du document souhaité, il programme son PVR pour un enregistrement automatique. Pour cela, l'utilisateur introduit l'heure de début et de fin, la référence du canal de diffusion étant généralement fournie par les informations de service diffusées. A l'heure dite, le PVR se met en marche, se cale sur le bon canal puis enregistre tous les paquets de données représentant sous la forme numérique le document audiovisuel souhaité. Lorsque l'utilisateur revient, il peut lancer la reproduction du contenu enregistré et ainsi voir ce qui a été reçu en son absence.

Pour faciliter la tâche de sélection et de commande d'enregistrement, un guide de programme (EPG) est généralement utilisé. L'EPG est un logiciel qui exploite des flux d'informations diffusés en même temps que le flux vidéo. Ces flux sont soit associés à un canal particulier (exemple sur la TNT) soit à un bouquet entier. Le contenu des flux exploités par un EPG consiste typiquement en une table des programmes prévus pour la semaine courante avec leur titre et l'heure prévue de diffusion. Une information supplémentaire peut être diffusée pour chaque document juste avant leur diffusion : elle est censée transmettre une indication plus précise de l'heure effective de diffusion du document (EIT P/F de DVB). Un utilisateur n'a qu'à désigner, sur une UI adaptée, un document dans cette table pour programmer son enregistrement.

Il se trouve que, pour des problèmes liés à la production et à la diffusion des documents, ceux-ci sont rarement diffusés à l'heure exacte prévue par l'EPG. Pour être sûr que le document sera enregistré dans son intégralité, l'utilisateur est souvent conduit à ajouter des « marges » temporelles au début et à la fin de sa programmation, le système peut aussi le faire automatiquement en activant une option. De ce fait, ce qui est enregistré sur le disque débute systématiquement par du contenu étranger au document lui-même, ce qui cause de la perte de temps pour l'utilisateur et occupe inutilement de la place mémoire. Une première solution consiste à tout visualiser puis à revenir en arrière en positionnant une marque de début et une marque de fin délimitant ainsi le document souhaité. Mais cette méthode est fastidieuse.

Une autre méthode consiste à détecter automatiquement des séquences spécifiques. Par exemple, le document US 4,977,455 décrit un système composé d'un ordinateur individuel et d'un magnétoscope. Le PC est doté d'une horloge et envoie à un moment indiqué par le diffuseur un signal d'enregistrement au VCR. Au cours de l'enregistrement, le VCR indexe le document et en informe le PC. De cette façon, le PC sait où le document est enregistré sur la bande magnétique. Ensuite lors de la lecture, les marques d'index sont transmises au PC qui peut ainsi savoir à quel emplacement se trouve la tête de lecture du VCR et de ce fait où chercher le document (en avant ou en arrière). Les séquences avant et après le document souhaité ayant une caractéristique bien déterminée, il est possible de délimiter automatiquement le document et lorsqu'un utilisateur le demande, de reproduire le document à partir du début réel. Mais l'expérience montre que les documents (par exemple les séquences publicitaires) que l'on peut délimiter automatiquement sont peu nombreux. Par conséquent, lorsque l'utilisateur veut enregistrer n'importe quel document, cette technique n'est plus satisfaisante.

La demande de brevet EP 1 530 216 déposée par TOSHIBA divulgue un éditeur d'images. Le document est découpé en plan séquence (ou « cut » en Anglais) possédant des caractéristiques particulières. Chaque plan séquence est identifié par une image que l'utilisateur peut sélectionner. Un menu d'interface permet à l'utilisateur de sélectionner une image de façon à accéder au plan séquence.

Le brevet US 6 321 024 déposé par FUJITA divulgue des menus apparaissant sur un écran pour faire du traitement de vidéo. Un utilisateur balaie rapidement le document et s'arrête sur une image qu'il marque. Puis le logiciel va déterminer le début et la fin du plan séquence et va afficher ces deux images. L'utilisateur peut ainsi voir le début et la fin de la séquence et la confirmer.

Aucun de ces deux documents ne donne une aide dans les choix proposés à l'utilisateur.

L'invention concerne un procédé d'identification d'un document audiovisuel au sein d'un appareil de reproduction selon la revendication 1.

De cette façon, suite à un enregistrement où l'utilisateur a programmé des marges pour être sûr d'enregistrer le document désiré, cet utilisateur peut informer son appareil du début et/ou de la fin du document en sélectionnant sur l'écran la séquence qu'il considère être effectivement le début et/ou la fin du document. Une valeur de probabilité associée à chaque plan séquence est également affichée. De cette manière, l'utilisateur est guidé dans son choix de plans séquence définissant le début et/ou la fin du document. L'appareil lui indique ainsi les plans séquence qui sont probablement ceux définissant le début et/ou la fin du document.

Selon un perfectionnement, après l'identification précise du document par l'utilisateur, les parties du contenu audiovisuel qui n'appartiennent pas à ce document sont effacées. De cette façon, la place mémoire dans l'appareil ainsi libérée peut servir à d'autres usages.

Selon un perfectionnement, la valeur de probabilité associée à un plan séquence est fonction du nombre de sélections des plans séquence précédents ayant la même caractéristique déterminée que le plan séquence donné. De cette façon, si l'utilisateur a précédemment sélectionné des plans séquence ayant une certaine caractéristique, il lui sera proposé en priorité des plans ayant cette caractéristique lors des prochaines étapes d'identification.

Selon un autre perfectionnement, la valeur de probabilité d'un plan séquence dépend de la méthode de détection par la caractéristique déterminée qui a permis sa détection et l'affichage de son identificateur. De cette façon, l'appareil met en évidence à l'utilisateur des plans séquence ayant des caractéristiques qui les rendent plus probables pour être identifiés comme un début et/ou fin de document.

Selon un autre perfectionnement, suite à l'identification du début ou de fin dudit document par l'introduction d'une commande de sélection, la valeur de probabilité d'un plan séquence donné est augmentée si la durée entre ce plan séquence donné et le plan séquence sélectionné par la commande correspond à la durée du document. De cette façon, on accroît la probabilité de trouver l'autre extrémité du document. Selon un autre perfectionnement, les identificateurs de séquence sont affichés selon un ordre dépendant de leurs valeurs respectives de probabilité.

Selon un autre perfectionnement, seuls les plans séquence détectés au cours d'une durée déterminée à partir du début du contenu et/ou jusqu'à la fin du contenu enregistré seront éventuellement affichés. Il n'est pas utile d'afficher des plans séquence situés au milieu du contenu enregistré car ils ne correspondent probablement pas au début ou à la fin du document.

Selon un autre perfectionnement, l'utilisateur sélectionne le plan séquence immédiatement avant celui qui est identifié comme étant le début du document, ou le plan immédiatement après celui qui est identifié comme étant la fin du document. De cette façon, l'identification du document peut s'effectuer par la fin de la première partie du contenu enregistré non comprise dans le document réellement désiré par l'utilisateur, ou par le début de la dernière partie du contenu enregistré non comprise dans le document.

Selon un autre perfectionnement, une indication temporelle indiquant pour chaque plan séquence affiché à quel moment ce plan apparaît dans le contenu enregistré, est affiché. De cette façon, l'utilisateur situe mieux chaque plan séquence possédant au moins une caractéristique déterminée, au sein du contenu enregistré.

La présente invention a aussi pour objet un appareil audiovisuel selon la revendication 9.

D'autres caractéristiques et avantages de l'invention apparaîtront à travers la description d'un exemple de réalisation non limitatif de l'invention, explicité à l'aide des figures jointes, parmi lesquelles :
- la figure 1 est un diagramme bloc d'un système de réception et d'enregistrement de documents de télévision selon un présent exemple de réalisation ;
- la figure 2 représente un organigramme montrant l'enchaînement des étapes pour enregistrer un document ;
- la figure 3 est un exemple de représentation d'une apparence d'écran montrant l'affichage de plans séquence afin de délimiter le début d'un document enregistré ;
- la figure 4 est un autre exemple de représentation d'une apparence d'écran montrant l'affichage de plans afin de délimiter la fin d'un document enregistré selon un perfectionnement de l'invention.

Pour faciliter la description, l'invention sera décrite ci-après dans le cadre de la visualisation d'une émission audiovisuelle. L'invention est cependant applicable à l'acquisition par l'utilisateur (lecture, écoute, etc.) de tout autre type d'informations présentées ordinairement de façon séquentielle.

Selon le présent exemple de réalisation, le récepteur pour la mise en oeuvre de l'invention peut être un téléviseur interactif, il peut aussi être un récepteur prévu pour la réception de données vidéo numériques, ou autorisant la connexion à un réseau de communication bidirectionnelle, Internet par exemple. Les éléments affichés sont par exemple des listes de services diffusant des documents audiovisuels.

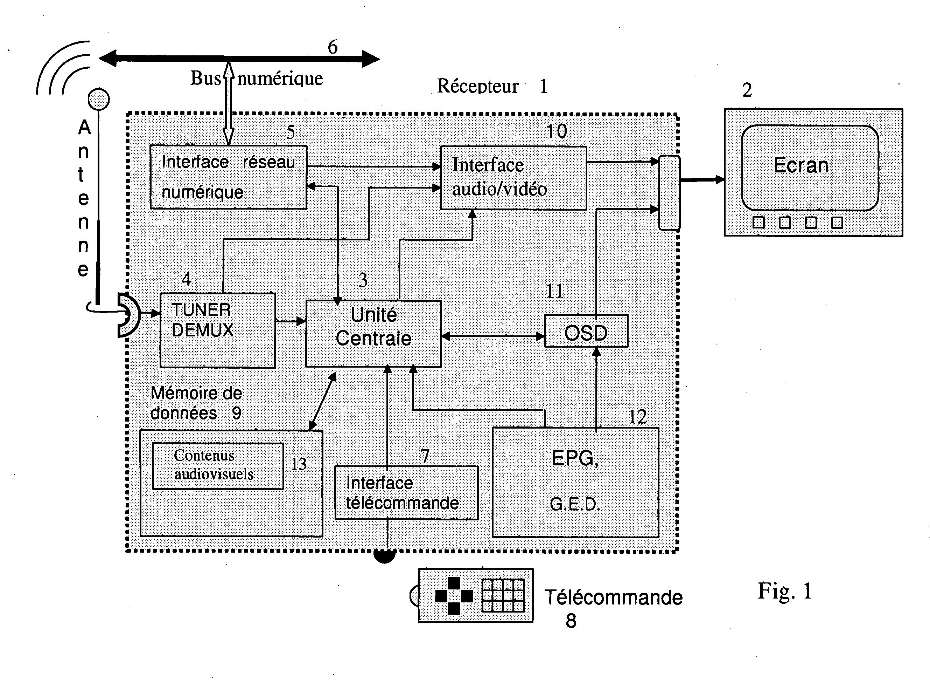

La figure 1 est un diagramme bloc d'un récepteur enregistreur audiovisuel, typiquement un PVR. Le récepteur 1 est relié à un écran de visualisation 2, une antenne, elle-même reliée à un moyen de réception 4 qui comprend un tuner qui fournit un signal à un démodulateur, les données reçues sont corrigées par un circuit correcteur et transmises à un démultiplexeur. Le démultiplexeur comporte un certain nombre de filtres programmés par une unité centrale 3 en fonction des diverses applications supportées par le récepteur 1. Les filtres correspondent à une information d'identification présente dans l'en-tête des paquets du signal démodulé.

Les sections ou paquets audio et/ou vidéo filtrés par le démultiplexeur sont stockés dans des zones prédéfinies d'une mémoire de données 9. La mémoire 9 est typiquement un disque dur d'une capacité minimale de 80 giga-octets. Si nécessaire, les informations sont tout d'abord déchiffrées par un circuit déchiffreur en fonction des droits de l'utilisateur, avant d'être stockées dans la mémoire 9. Le récepteur comporte également une logique de décodage audio/vidéo 10 pour la génération des signaux audiovisuels envoyés à l'écran de télévision 2, et éventuellement une interface 5 pour la communication avec un bus numérique local à haut débit 6 permettant de recevoir des données audio/vidéo d'un réseau bidirectionnel avec un stockage dans la mémoire 9. Ce réseau est par exemple un réseau IEEE 1394. Une mémoire 12 contient le logiciel d'exploitation du récepteur et des applications spécifiques. Selon le présent exemple, la mémoire 12 contient au moins un module interface utilisateur appelé « Guide Enregistreur de Documents» ou GED en abrégé. Pour la clarté du schéma, la mémoire 12 est représentée sous la forme d'un seul bloc, mais comporte à la fois de la mémoire vive, de la mémoire morte et de la mémoire persistante reprogrammable (par exemple de type 'Flash').

Le récepteur 1 comporte également une interface infrarouge 7 d'une télécommande 8, ladite interface étant également reliée au microprocesseur 3. La télécommande est dotée des touches de navigation ↑, ↓, → et ←, « Enregistrement» et une touche de validation « OK » dont nous verrons plus tard les fonctions respectives. L'utilisation de touches de navigation ne limite en rien l'invention à ce type de touches, l'utilisation de touches de direction « Haut » et « Bas » ou d'une souris, ou tout autre moyen de pointage pour naviguer sur une liste affichée est tout à fait envisageable

Un générateur de caractères 11, appelé souvent circuit OSD, de l'Anglais "On Screen Display" (signifiant littéralement "affichage sur l'écran") permet la génération de menus de commande ou de graphiques relatifs aux paramètres du récepteur ou à une application particulière. Le signal vidéo généré par ce générateur de caractères est multiplexé avec l'un des signaux vidéo en provenance des moyens de réception 4 ou de l'interface 5 avec le réseau numérique vers une première prise Péritel (prise SCART en anglais) reliée à l'écran de visualisation 2.

L'exemple de réalisation se place dans le cadre d'un système de diffusion de télévision numérique, par exemple de type DVB (pour 'Digital Video Broadcast'). L'invention ne se limite pas à ce cadre, et peut être employée dans d'autres environnements où des listes ordonnées d'éléments sont présentées à un utilisateur. L'interface utilisateur comporte une application de guide de programmes électroniques. Ce guide permet à l'utilisateur d'accéder à des informations descriptives concernant les services ainsi que les documents présents et futurs diffusés par ces services. Ces informations sont dérivées de données également diffusées sur le réseau. Selon le présent exemple, ces données sont des données de service du DVB, décrites plus en détail dans le document "EN 300 468 Digital Video Broadcasting; Spécification for Service Information (SI) in DVB systems". Ce document est publié par l'ETSI ("European Telecommunications Standards Institute"). Ces données sont transportées dans le flux multiplexé reçu par le récepteur dans des paquets possédant des identificateurs repérés de façon connue par le démultiplexeur du circuit de réception 4 sous contrôle du microprocesseur 3 et récupérées par ce dernier dans une partie de la mémoire 9, pour utilisation par l'EPG et le logiciel GED. Les données diffusées sont organisées en tables décrivant de façon hiérarchisée les objets des flux. Une description des services disponibles peut être obtenue de façon connue notamment à partir de la table 'SDT', ainsi que les descriptions des documents diffusés à partir de la table 'EIT'. La hiérarchie des tables ainsi que les identificateurs des paquets correspondants sont décrits dans le document DVB qui vient d'être cité.

Dans un premier temps, les paquets contenant les informations de services sont regroupés afin d'élaborer une liste de programmes au niveau du récepteur. L'utilisateur lance son EPG pour enregistrer un document audiovisuel identifié par les informations de service diffusé. Le numéro et/ou l'identifiant textuel du service courant est affiché dans une petite fenêtre de l'écran, indépendamment des listes affichées. L'utilisateur sélectionne un document et en activant une touche dite « Enregistrement » ou en activant l'icône correspondant, programme son récepteur 1 pour enregistrer le document.

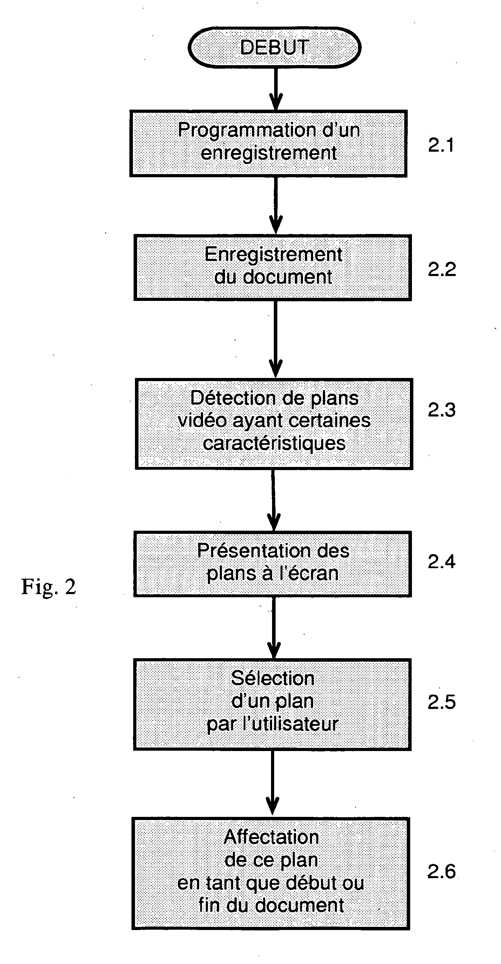

La figure 2 montre les principales étapes de l'enregistrement par l'EPG et le logiciel GED d'un document audiovisuel. Dans un premier temps (étape 2.1), l'utilisateur utilise son EPG pour sélectionner un document prévu diffusé sur un service donné. Les informations de service liées à ce document sont :
- l'heure de début de la diffusion du document,
- la durée du document,
- le service de diffusion,
- le titre et d'autres caractéristiques du document telles que : le type, le thème, la langue, les éventuelles rediffusions, ...

L'utilisation valide la commande d'enregistrement et le précepteur se programme en fonction de l'heure de diffusion indiquée. Avantageusement, le récepteur dispose d'une fonction pour incorporer automatiquement une marge temporelle pour déclencher l'enregistrement cinq minutes avant l'heure prévue par le diffuseur et terminer l'enregistrement cinq minutes après l'heure prévue par le diffuseur. De cette manière, même si le document est diffusé légèrement en avance, l'utilisateur est sûr d'enregistrer le début et la fin.

A l'étape 2.2, le récepteur 1 enregistre le contenu audiovisuel correspondant au document souhaité par l'utilisateur. Le contenu est enregistré dans une partie 13 de la mémoire de données 9. L'enregistrement s'effectue même si l'utilisateur regarde en même temps le document. Si finalement l'utilisateur ne veut pas garder cet enregistrement, il l'efface de la mémoire. Sinon, la présente invention permet d'éliminer les parties non souhaitées qui sont présentes au début ou à la fin du contenu enregistré dans la mémoire 9. L'utilisateur lance le logiciel GED permettant d'identifier précisément le document au sein du contenu enregistré. Le logiciel GED détecte tout d'abord les plans séquences possédant une certaine caractéristique (étape 2.3). Un plan séquence (ou « shot » en Anglais) est une séquence ininterrompue tournée par une caméra ou un caméscope en une seule prise de vues. De préférence, ces caractéristiques correspondant à un début ou à une fin d'un document audiovisuel déterminé, par exemple :
- le jingle annonçant le début ou la fin d'une page de publicité,
- la musique annonçant la fin du bulletin météo (le contenu visuel varie, la musique reste la même),
- une image avec le texte « le film de ce soir »,
- le lion rugissant commençant tous les films produits par un grand fournisseur de film,
- une femme drapée portant une torche commençant tous les films produits par un autre grand fournisseur de films,
- etc...

A l'étape 2.4, des images caractéristiques de ces différents plans séquence sont proposées dans un menu. Avantageusement, l'heure précise de diffusion est associée à chaque image. L'utilisateur voit ainsi des identificateurs visuels d'une pluralité de plans séquence qui ont été enregistrés pendant une durée prédéterminée au début de l'enregistrement, typiquement un quart d'heure. L'utilisateur peut ainsi reconnaître le plan qui précède immédiatement ou commence au début du document, et le plan qui termine ou qui suit immédiatement la fin du document et sélectionner les plans (étape 2.5). Par exemple, si l'utilisateur désire conserver le document diffusé sur une chaîne la veille, il peut voir apparaître parmi les identificateurs affichés, l'image classique du jingle de fin d'une page de publicité. Il sait que les images après ce jingle sont les premières du film. Alors, l'utilisateur sélectionne cet identificateur à l'aide des touches de direction et de ce fait, informe le logiciel GED du début exact du document. Dans ce cas, le document enregistré débute par le plan séquence suivant celui activé. Si l'image de la femme drapée portant une torche est sélectionnée par l'utilisateur, alors le logiciel GED sait que le document enregistré débute par ce plan séquence.

De cette façon, le logiciel GED tient compte de la sélection faite par l'utilisateur pour identifier le début exact du document ainsi que la fin (étape 2.6). Avantageusement, une fois le document correctement délimité, le logiciel GED efface de la zone 13 de la mémoire 9 les parties du contenu audiovisuel qui ne sont pas comprises dans le document.

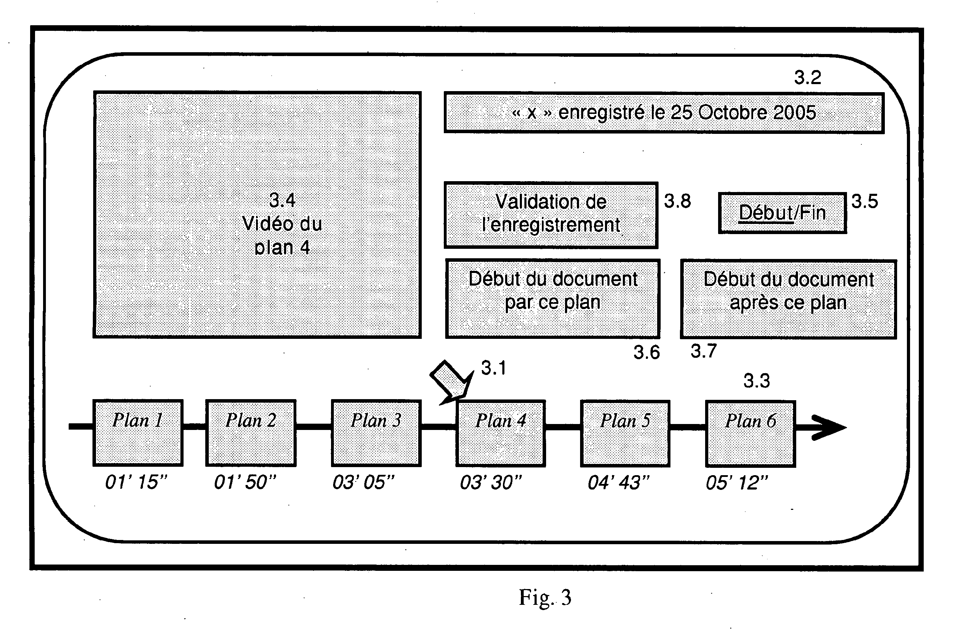

La figure 3 montre une apparence d'écran générée par le logiciel GED affichant des identificateurs pour la sélection des plans séquence de début et de fin du document souhaité par l'utilisateur. Un curseur 3.1 permet de sélectionner les différents éléments du menu. L'utilisateur déplace le curseur 3.1 à l'aide d'un moyen de pointage tel que des touches de direction ou une souris. Le menu comporte un bandeau supérieur 3.2 où s'affichent le titre du document enregistré et la date et l'heure de l'enregistrement. Les plans séquence ayant une caractéristique particulière sont identifiés par de petites images 3.3 placées sur une droite représentant l'axe du temps. Avantageusement, une indication temporelle (en minutes et secondes) est indiquée à coté de chaque petite image pour la situer dans le temps par rapport au début du contenu enregistré. Lorsque l'utilisateur sélectionne une petite image en plaçant le curseur dessus, la vidéo associée est reproduite dans une zone de l'écran 3.4. De cette manière, l'utilisateur peut contrôler si ce plan correspond bien à celui au début ou à la fin du document enregistré. L'utilisateur sélectionne l'icône 3.5 intitulé « Début/Fin » pour rechercher les plans séquence soit au début, soit à la fin du contenu enregistré. Lorsque la recherche concerne le début du document, les commandes pour valider le choix sont identifiées par les icônes 3.6 « Début du document par ce plan » et 3.7 « Début du document (immédiatement) après ce plan ». Lorsque la recherche concerne la fin du document, les commandes pour valider le choix sont identifiées par les icônes 4.6 « Fin du document par ce plan » et 4.7 « Fin du document (immédiatement) avant ce plan ». Supposons que l'image du jingle de début de la page de publicité se trouve parmi les identificateurs. L'utilisateur sélectionne cet identificateur qui apparaît alors mis en évidence et active l'icône « Début du document après ce plan ». De même, s'il voit un identificateur montrant une image avec « The End », alors il sélectionne cet identificateur, et active l'icône « Fin du document par ce plan ». Dans ce cas, le dernier plan séquence du document enregistré est celui du plan séquence sélectionné. Les sélections successives de l'icône « Début/Fin » font apparaître :
- soit les icônes : début du document après ce plan », 3.6
   « Début du document par ce plan », 3.7
- soit les icônes : « Fin du document avant ce plan » 4.6
   « Fin du document par ce plan ». 4.7

Lorsque l'utilisateur a sélectionné et validé les plans séquence marquant lé début et la fin du document enregistré, il active l'icône 3.8 marqué « Validation de l'enregistrement ». Le logiciel GED modifie alors les pointeurs en mémoire pour délimiter parfaitement le document et ainsi lorsque l'utilisateur demande une reproduction, le document commence et se termine par les plans séquence corrects. Avantageusement, le logiciel GED efface les parties du contenu enregistré situées avant le début du document et après la fin du document.

On a dit précédemment que la détection des plans séquence caractéristiques peut s'effectuer par plusieurs manières, et notamment par la détection d'un modèle au moins d'image ou d'un modèle d'une séquence audio. Ces modèles (ou « pattern » en Anglais) sont mis dans une table et utilisés comme données d'entrées par une routine de reconnaissance de modèle. Selon un perfectionnement de la présente invention, le logiciel GED présente à l'utilisateur les plans séquence détectées en affichant une valeur de probabilité. Cette valeur de probabilité peut être déterminée directement par le moyen de détection, ainsi l'image de la femme drapée portant une torche ou du lion rugissant ont une plus grande probabilité de commencer un film que le plan succédant un jingle d'une page de publicité. Certains modèles sont plus caractéristiques que d'autres pour être identifiés comme début ou fin de document. Chaque modèle reçu par le récepteur 1 est associé à une valeur de probabilité absolue au sein d'une table de modèle. Suite à l'analyse du document, les valeurs de probabilité absolue de tous les plans séquences sont ajoutées et ramenées à une valeur relative pour ce document afin que la somme des probabilités soit égale à 100%. Les valeurs relatives sont alors affichées sous les identificateurs par exemple. Selon une variante, les identificateurs de plans séquence sont présentés à l'écran selon un ordre dépendant de leur valeur respective de probabilité. Par exemple, l'identificateur à gauche de l'écran correspond au plan séquence qui a la plus grande probabilité d'être le plan séquence débutant le document (ou le finissant).

Un exemple de structure de table de modèle est représenté :

| Nom du modèle | Adresse des données de modèle | Valeur de probabilité |
|---|---|---|
| Musique de la météo | PT1 | 20% |
| Lion rugissant | PT2 | 90% |
| Femme drapée portant une torche | PT3 | 90% |
| Jingle de fin d'une page de publicité | PT4 | 40% |
| Musique des COSMOS 1999 | PT5 | 70% |
| ... | ... | ... |

Une autre façon de déterminer des probabilités consiste à utiliser le nombre de sélections effectuées par l'utilisateur. Pour cela, chaque modèle mis en table est associé à un compteur qui est incrémenté chaque fois que l'utilisateur sélectionne une image correspondant à ce modèle. Lorsqu'un nouveau contenu est sélectionné par l'utilisateur pour définir les plans séquence de début et de fin, le logiciel GED détecte les plans séquence caractéristiques avec les modèles en mémoire et affiche les valeurs de compteurs sous forme de pourcentage.

Un exemple de structure de table pour implémenter le perfectionnement est représenté ci après :

| Nom du modèle | Adresse des données de modèle | Compteur de sélections |
|---|---|---|
| Musique de la météo | PT1 | 8 |
| Lion rugissant | PT2 | 2 |
| Femme drapée portant une torche | PT3 | 3 |
| Jingle de fin d'une page de publicité | PT4 | 6 |
| Musique des COSMOS 1999 | PT5 | 0 |
| ... | ... | ... |

Une autre façon de déterminer des probabilités associées à un plan séquence consiste à exploiter le fait que l'on connaisse la durée du document. Cette durée est habituellement transmise dans les informations de service liées aux programmes diffusées. Lorsque l'utilisateur sélectionne l'identificateur correspondant au plan séquence débutant le document, le logiciel GED va rechercher le plan séquence plus loin dans le temps de la durée du document et attribue à ce plan séquence une probabilité maximale, 50 % par exemple. Cette façon de déterminer des probabilités est parfaitement combinable aux deux précédentes.

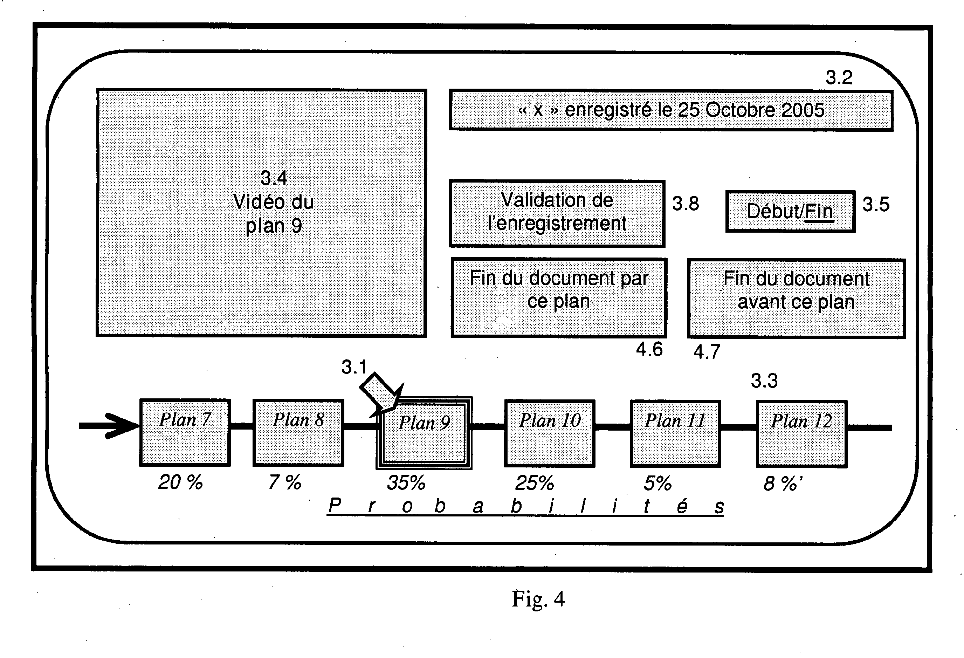

La figure 4 illustre le perfectionnement consistant à attribuer des probabilités à chaque plan séquence déterminé et à les représenter à l'écran. Ce menu affiché permet de rechercher les plans séquence permettant d'identifier la fin du document. Les identificateurs visuels des plans séquence qui ont été enregistrés pendant une durée prédéterminée à la fin de l'enregistrement, typiquement au cours du quart d'heure de fin, sont affichés. Dans l'exemple illustré, l'image associée au plan séquence numéro 9 est graphiquement mis en évidence et la vidéo de ce plan apparaît dans la zone 3.4 en haut à gauche. Les niveaux de probabilités apparaissent en dessous de chaque image, donnant ainsi à l'utilisateur une indication sur le choix préférentiel du plan séquence pour débuter ou terminer le document. Le niveau de probabilité est calculé à partir des valeurs de compteurs de sélections enregistrées dans la table ci-dessus. Dans un premier temps, le logiciel GED corrèle les plans séquence détectés à l'étape 2.3 avec les plans séquence référencés par la table. Plusieurs méthodes permettant de corréler deux plans séquence peuvent être utilisées ici. Nous pouvons citer par exemple la méthode consistant dans un premier temps à extraire de chaque image une signature compacte caractérisant la couleur et la texture de l'image (par exemple des histogrammes couleur et gradient). Un calcul de distance entre les histogrammes permet d'obtenir une information sur la ressemblance de deux images. La distance entre deux plans séquence résultera de la mise en correspondance des images des deux plans séquence deux à deux (si une image n du premier plan séquence correspond à une image m du deuxième plan séquence alors l'image n+1 correspond à l'image m+1). Deux plans séquence seront corrélés si la moyenne des distances entre images est inférieure à un seuil. Si aucun plan séquence détecté ne correspond à un modèle référencé, alors chaque plan séquence détecté possède la même probabilité d'être sélectionné. Sinon, le logiciel GED affecte aux plans non référencés la probabilité minimale, 5% typiquement, les probabilités des autres plans séquence sont déterminées au prorata de la valeur du compteur. Par exemple, le logiciel GED a détecté au début de l'enregistrement cinq plans séquence caractéristiques dont le jingle de fin d'une page de publicité (valeur de compteur : 6) et le lion rugissant (valeur de compteur : 1). Le logiciel GED affecte 5 % pour les trois plans séquence non référencés, 60 % pour le jingle de fin de page de publicité et 20% pour le lion rugissant.

Lors de l'apparition du menu de sélection de la figure 4, le focus et le curseur 3.1 sont placés par le logiciel GED sur la petite image ayant la plus grande probabilité. Dans l'exemple précédent, le logiciel GED donne le focus à la petite image identifiant le jingle de fin de page de publicité. De cette façon, le logiciel GED apporte une aide à l'utilisateur dans le choix à effectuer.

Chaque fois que l'utilisateur sélectionne un plan séquence référencé dans la table, son compteur est incrémenté.

## Revendications

1. Procédé d'identification d'un document audiovisuel au sein d'un appareil de reproduction, le dit document faisant partie d'un contenu enregistré contenant également une partie n'appartenant pas audit document située au début ou à la fin du contenu enregistré, le procédé comportant :
une étape de détection (2.3) de plans séquence appartenant au contenu enregistré et possédant une caractéristique déterminée parmi une pluralité de caractéristiques déterminées,
une étape de détermination et d'association d'une valeur de probabilité pour chaque plan séquence détecté, la valeur de probabilité déterminée correspondant à la probabilité que le plan séquence considéré soit bien celui identifiant le début ou la fin dudit document
une étape d'affichage (2.4) d'identificateurs associés aux plans séquence détectés et une étape d'affichage de la dite valeur de la probabilité associée à chaque plan séquence détecté
une étape d'identification (2.6) du début ou de la fin dudit document par une étape d'introduction (2.5) dans l'appareil de reproduction d'une commande de sélection d'un identificateur affiché, le début ou la fin dudit document étant identifié par le plan séquence associé à l'identificateur sélectionné.

2. Procédé d'identification d'un document audiovisuel selon la revendication 1 ; **caractérisé en ce que** la valeur de probabilité d'un plan séquence donné est fonction du nombre de sélections précédemment effectuées par l'utilisateur des plans séquence ayant la même caractéristique déterminée que le plan séquence donné.

3. Procédé d'identification d'un document audiovisuel selon la revendication 1 ; **caractérisé en ce que** chaque caractéristique déterminée est associée à une valeur de probabilité absolue de marquer le début ou la fin d' un document audiovisuel, la valeur de probabilité d'un plan séquence détecté est calculée à partir de la valeur de probabilité associée à la caractéristique déterminée qui a permis la détection dudit plan séquence et l'affichage de l' identificateur correspondant.

4. Procédé d'identification d'un document audiovisuel selon l'une quelconque des revendication 1 à 3 ; **caractérisé en ce que**, suite à l'étape d'identification (2.6) du début ou de fin dudit document par l'introduction (2.5) d'une commande de sélection, la valeur de probabilité d'un plan séquence donné est augmentée si la durée entre ce plan séquence donné et le plan séquence sélectionné par la commande correspond à la durée du document, la durée du document étant une information reçue par l'appareil de reproduction.

5. Procédé d'identification d'un document audiovisuel selon l'une quelconque des revendications 1 à 4 ; **caractérisé en ce que** l'étape d'affichage présente les identificateurs de séquence selon un ordre dépendant de leurs valeurs respectives de probabilité.

6. Procédé d'identification d'un document audiovisuel selon l'une quelconque des revendications 1 à 4 ; **caractérisé en ce que** l'identificateur du plan séquence ayant la valeur de probabilité la plus grande est graphiquement mise en évidence.

7. Procédé d'identification d'un document audiovisuel selon l'une quelconque des revendications précédentes ; **caractérisé en ce que** l'étape de détection (2.3) ne détecte les plans séquence qu'au cours d'une durée déterminée à partir du début du contenu et/ou jusqu'à la fin du contenu enregistré

8. Procédé d'identification d'un document audiovisuel selon l'une quelconque des revendications précédentes ; **caractérisé en ce que** l'étape de sélection (2.5) s'effectue sur le plan séquence immédiatement avant celui qui est identifié comme étant le début du document, ou sur le plan séquence immédiatement après celui qui est identifié comme étant la fin du document.

9. Appareil audiovisuel (1) comportant un moyen pour commander l'enregistrement (3, 12, 7, 8) d'un document et un moyen pour enregistrer un contenu audiovisuel (3, 9, 12, 13) comprenant ledit document et au moins une partie n'appartenant pas audit document , située au début ou à la fin du contenu audiovisuel, l'appareil audiovisuel (1) comprenant également :
un moyen de détection (3,12) de plans séquence appartenant au contenu enregistré et possédant une caractéristique déterminée parmi une pluralité de caractéristiques déterminées
un moyen de détermination et d'association d' une valeur de probabilité pour chaque plan séquence détecté (3,12), la valeur de probabilité déterminée correspondant à la probabilité que le plan séquence considéré soit bien celui identifiant le début ou la fin dudit document.
un moyen de génération d'un signal de menu d'affichage (3, 11, 12) comportant des identificateurs associés aux plans séquence détectés dans le contenu enregistré et la dite valeur de probabilité associée à chaque plan séquence détecté
un moyen d'introduction (7, 8) d'une commande de sélection d'un des identificateurs du menu d'affichage, le début ou la fin dudit document étant identifié par le plan séquence associé à l'identificateur sélectionné.

10. Appareil audiovisuel (1) selon la revendication 9 ; **caractérisé en ce que** le moyen de détermination (3,12) calcule la valeur de probabilité d'un plan séquence donné en prenant en compte le nombre de sélections précédemment effectuées par l'utilisateur des plans séquence ayant la même caractéristique déterminée que le plan séquence donné.

11. Appareil audiovisuel (1) selon la revendication 9 ; **caractérisé en ce que** chaque caractéristique déterminée est associée à une valeur de probabilité absolue de marquer le début ou la fin d' un document audiovisuel et le moyen de détermination (3,12) calcule la valeur de probabilité d'un plan séquence donné en prenant en compte la valeur de probabilité associée à la caractéristique déterminée qui a permis la détection dudit plan séquence et l'affichage de l'identificateur correspondant.

12. Appareil audiovisuel (1) selon l'une quelconque des revendication 9 à 11 ; **caractérisé en ce que** le moyen de détermination (3,12) de la valeur de probabilité d'un plan séquence donné prend en compte la durée du document, la durée du document étant une information reçue par l'appareil, et le choix du plan séquence sélectionné en tant que début ou fin du document; si la durée entre le plan séquence donné et le plan séquence sélectionné est égale à la durée du document, la probabilité du plan séquence donné est augmentée.

13. Appareil audiovisuel (1) selon l'une quelconque des revendications 9 à 12 ; **caractérisé en ce que** dans le menu d'affichage généré, les identificateurs de séquence sont présentés selon un ordre dépendant de leurs valeurs respectives de probabilité.

14. Appareil audiovisuel (1) selon l'une quelconque des revendications 9 à 12 ; **caractérisé en ce que** dans le menu d'affichage généré l'identificateur du plan séquence ayant la valeur de probabilité la plus grande est présenté avec une distinction graphique.

## Claims

1. Method for identifying an audiovisual document within a reproduction device, said document being part of a recorded content also comprising a part that does not belong to said document, located at the beginning or at the end of the recorded content, the method comprising:
a step of detection (2.3) of shots being part of the recorded content and having a determined characteristic among a plurality of determined characteristics
a step of determination and association of a probability value for each detected shot, the determined probability value corresponding to the probability that the considered shot is indeed the one identifying the beginning or the end of said document
a step of display (2.4) of identifiers associated with the detected shots and a display step of the said value of the probability associated to each detected shot
a step of identification (2.6) of the beginning or the end of said document by an introduction step (2.5) in the reproduction device of a selection command of a displayed identifier, the beginning or the end of said document being identified by the shot associated with the selected identifier.

2. Method for identifying an audiovisual document according to claim 1, **characterized in that** the probability value of a given shot is a function of the number of preceding shot selections having the same determined characteristic as the given shot.

3. Method for identifying an audiovisual document according to claim 1; **characterized in that** each determined characteristic is associated to an absolute probability value of marking the beginning or the end of an audiovisual document, the probability value of the shot is computed based on the probability value associated to the determined characteristic which enabled the detection of said shot and the display of the corresponding identifyer.

4. Method for identifying an audiovisual document according to any one of claims 1 to 3; **characterized in that**, following the identification step (2.6) of the beginning or the end of said document by the introduction (2.5) of a selection command, the probability value of a given shot is increased if the duration between this given shot and the shot selected by the command correspond to the duration of the document, the duration of the document being an information received by the reproduction device.

5. Method for identifying an audiovisual document according to any one of claims 1 to 4; **characterized in that** the display step presents shot identifiers according to an order depending on their respective probability values.

6. Method for identifying an audiovisual document according to any one of claims 1 to 4; **characterized in that** the shot identifier having the highest probability is graphically highlighted.

7. Method for identifying an audiovisual document according to any one of the previous claims, **characterized in that** the detection step (2.3) only detects shots over a determined period from the beginning of the content and/or to the end of the recorded content.

8. Method for identifying an audiovisual document according to any one of the previous claims; **characterized in that** the selection step (2.5) is carried out on the shot immediately preceding the shot that is identified as being the beginning of the document, or on the shot immediately after the shot that is identified as being the end of the document.

9. Audiovisual device (1) comprising a means to command the recording (3, 12, 7, 8) of a document and a means to record an audiovisual content (3, 9, 12, 13) comprising said document and at least one part not belonging to said document, located at the beginning or at the end of the audiovisual content, the reproducing device (1) also comprising:
a means for detection (3,12) of shots being part of the recorded content and having a determined characteristic among a plurality of determined characteristics,
the determined characteristic corresponding to the start or end of a determined document
a means for determination and association of a probability value for each detected shot (3, 12), the determined probability value corresponding to the probability that the considered shot is indeed the one identifying the beginning ot the end of said document
a means for generation of a menu display signal (3, 11, 12) comprising identifiers associated with the detected shots in the recorded content and said value of the probability associated to each detected shot
a means of introducing (7, 8) a selection command of one of the display menu, the beginning or the end of said document being identified by the shot associated with the selected identifier.

10. Audiovisual device (1) according to claim 9; **characterized in that** the means of determination (3,12) computes the probability value of a given shot taking into account the number of preceding shot selections previously done by the user of shots and having the same determined characteristic as the given detected shot.

11. Audiovisual device (1) according to claim 9; **characterized in that characterized in that** each determined characteristic is associated to an absolute probability value of marking the beginning or the end of an audiovisual document (3, 12) and **in that** the determination means (12) computes the probability value of a given shot by taking into account the probability value associated to the determined characteristic which enabled the detection of said shot and the display of the corresponding identifyer.

12. Audiovisual device (1) according to any one of claims 9 to 11; **characterized in that** the determination means (3,12) of the probability value of a given shot takes into account the duration of the document, the duration of the document being an information received by the device, and the choice of the selected shot as beginning or end of the document; if the duration between the given shot and the selected shot is equal to the duration of the document, the probability of the given shot is increased.

13. Audiovisual device (1) according to any one of claims 9 or 12; **characterized in that**, in the generated display menu, the shot identifiers are presented according to an order dependent on their respective probability values.

14. Audiovisual device (1) according to any one of claims 9 to 12 ; **characterized in that**, in the generated display menu, the identifier of the shot having the highest probability value is presented with a graphical distinction.

## Patentansprüche

1. Verfahren zur Identifizierung eines audiovisuellen Dokumentes innerhalb eines Wiedergabegerätes, wobei das Dokument Bestandteil eines aufgezeichneten Inhaltes ist, der ebenfalls einen Bestandteil enthält, der nicht zu dem Dokument gehört und sich am Anfang oder am Ende des aufgezeichneten Inhaltes befindet, wobei das Verfahren umfasst:
einen Schritt zur Erfassung (2.3) von Sequenzeinstellungen, die zu dem aufgezeichneten Inhalt gehören und eine bestimmte Eigenschaft unter einer Vielzahl von bestimmten Eigenschaften besitzen,
einen Schritt zur Bestimmung und zur zuordnung eines Wahrscheinlichkeitswertes für jede erfasste Sequenzeinstellung, wobei der bestimmte Wahrscheinlichkeitswert der Wahrscheinlichkeit entspricht, dass die berücksichtigte Sequenzeinstellung genau diejenige ist, die den Anfang oder das Ende des Dokumentes identifiziert,
einen Schritt zur Anzeige (2.4.) von Identifikatoren, die den erfassten Sequenzeinstellungen zugeordnet sind, und einen Schritt zur Anzeige des Wahrscheinlichkeitswertes, der jeder erfassten Sequenzeinstellung zugeordnet ist,
einen Schritt zur Identifizierung (2.6) des Anfangs oder des Endes des Dokumentes durch einen Schritt zur Eingabe (2.5) eines Auswahlbefehls eines angezeigten Identifikators in das Wiedergabegerät, wobei der Anfang oder das Ende des Dokumentes durch die Sequenzeinstellung identifiziert wird, die dem ausgewählten Identifikator zugeordnet ist.

2. Verfahren zur Identifizierung eines audiovisuellen Dokumentes nach Anspruch 1, **dadurch gekennzeichnet, dass** der Wahrscheinlichkeitswert einer gegebenen Sequenzeinstellung eine Funktion der Anzahl der zuvor von dem Benutzer vorgenommenen Auswahl von Sequenzeinstellungen ist, die dieselbe bestimmte Eigenschaft aufweisen wie die gegebene Sequenzeinstellung.

3. Verfahren zur Identifizierung eines audiovisuellen Dokumentes nach Anspruch 1, **dadurch gekennzeichnet, dass** jede bestimmte Eigenschaft einem absoluten Wahrscheinlichkeitswert zum Kennzeichnen des Anfangs oder des Endes eines audiovisuellen Dokumentes zugeordnet ist, dass der Wahrscheinlichkeitswert einer erfassten Sequenzeinstellung ausgehend von dem wahrscheinlichkeitswert berechnet wird, welcher der bestimmten Eigenschaft zugeordnet ist, die die Erfassung der Sequenzeinstellung und die Anzeige des entsprechenden Identifikators ermöglicht hat.

4. Verfahren zur Identifizierung eines audiovisuellen Dokumentes nach irgendeinem der Ansprüche 1 bis 3, **dadurch gekennzeichnet, dass**, auf den Schritt zur Identifizierung (2.6) des Anfangs oder des Endes des Dokumentes durch Eingabe (2.5) eines Auswahlbefehls folgend, der Wahrscheinlichkeitswert einer gegebenen Sequenzeinstellung erhöht wird, wenn die Zeitdauer zwischen dieser gegebenen Sequenzeinstellung und der durch den Befehl ausgewählten Sequenzeinstellung der Zeitdauer des Dokumentes entspricht, wobei die Zeitdauer des Dokumentes aus einer Information besteht, die das Wiedergabegerät erhalten hat.

5. Verfahren zur Identifizierung eines audiovisuellen Dokumentes nach irgendeinem der Ansprüche 1 bis 4, **dadurch gekennzeichnet, dass** der Schritt zur Anzeige die Sequenzidentifikatoren in einer Reihenfolge anzeigt, die von ihren jeweiligen Wahrscheinlichkeitswerten abhängt.

6. Verfahren zur Identifizierung eines audiovisuellen Dokumentes nach irgendeinem der Ansprüche 1 bis 4, **dadurch gekennzeichnet, dass** der Identifikator der Sequenzeinstellung, die den gröβten Wahrscheinlichkeitswert aufweist, grafisch hervorgehoben wird.

7. Verfahren zur Identifizierung eines audiovisuellen Dokumentes nach irgendeinem der vorhergehenden Ansprüche, **dadurch gekennzeichnet, dass** der Schritt zur Erfassung (2.3) die Sequenzeinstellungen nur im Verlaufe einer bestimmten Zeitdauer ausgehend vom Anfang des Inhaltes und/oder bis zum Ende des aufgezeichneten Inhaltes erfasst.

8. Verfahren zur Identifizierung eines audiovisuellen Dokumentes nach irgendeinem der vorhergehenden Anspruche, **dadurch gekennzeichnet, dass** der Schritt zur Auswahl (2.5) bei der Sequenzeinstellung erfolgt, die derjenigen unmittelbar vorausgeht, die als der Anfang des Dokumentes identifiziert wird, oder bei der Sequenzeinstellung erfolgt, die unmittelbar auf diejenige folgt, die als das Ende des Dokumentes identifiziert wird.

9. Audiovisuelles Gerät (1), ein Mittel umfassend, um die Aufzeichnung (3, 12, 7, 8) eines Dokumentes zu steuern, und ein Mittel, um einen audiovisuellen Inhalt (3, 9, 12, 13) aufzuzeichnen, der das Dokument aufweist und mindestens einen Bestandteil, der nicht zu dem Dokument gehört und der sich am Anfang oder am Ende des audiovisuellen Inhaltes befindet, wobei das audiovisuelle Gerät (1) außerdem aufweist:
ein Mittel zur Erfassung (3, 12) von Sequenzeinstellungen, die zu dem aufgezeichneten Inhalt gehören und eine bestimmte Eigenschaft unter einer Vielzahl von bestimmten Eigenschaften besitzen,
ein Mittel zur Bestimmung und zur Zuordnung eines Wahrscheinlichkeitswertes für jede erfasste Sequenzeinstellung (3, 12), wobei der bestimmte Wahrscheinlichkeitswert der Wahrscheinlichkeit entspricht, dass die berücksichtigte Sequenzeinstellung, genau diejenige ist, die den Anfang oder das Ende des Dokumentes identifiziert,
ein Mittel zur Erzeugung eines Signals eines Anzeigemenus (3, 11, 12), Identifikatoren umfassend, die den Sequenzeinstellungen zugeordnet sind, die in dem aufgezeichneten Inhalt erfasst werden, und den Wahrscheinlichkeitswert, der jeder erfassten Sequenzeinstellung zugeordnet ist,
ein Mittel zur Eingabe (7, 8) eines Auswahlbefehls von einem der Identifikatoren des Anzeigemenus, wobei der Anfang oder das Ende des Dokumentes durch die Sequenzeinstellung identifiziert wird, die dem ausgewählten Identifikator zugeordnet ist.

10. Audiovisuelles Gerät (1) nach Anspruch 9, **dadurch gekennzeichnet, dass** das Mittel zur Bestimmung (3, 12) den Wahrscheinlichkeitswert einer gegebenen Sequenzeinstellung berechnet, indem die Anzahl der zuvor von dem Benutzer vorgenommenen Auswahl von Sequenzeinstellungen berücksichtigt wird, die dieselbe bestimmte Eigenschaft aufweisen wie die gegebene Sequenzeinstellung.

11. Audiovisuelles Gerät (1) nach Anspruch 9, **dadurch gekennzeichnet, dass** jede bestimmte Eigenschaft einem absoluten Wahrscheinlichkeitswert zum Kennzeichnen des Anfangs oder des Endes eines audiovisuellen Dokumentes zugeordnet ist, und dass das Mittel zur Bestimmung (3, 12) den Wahrscheinlichkeitswert einer gegebenen Sequenzeinstellung berechnet, indem der Wahrscheinlichkeitswert berücksichtigt wird, welcher der bestimmten Eigenschaft zugeordnet ist, die die Erfassung der Sequenzeinstellung und die Anzeige des entsprechenden Identifikators ermöglicht hat.

12. Audiovisuelles Gerät (1) nach irgendeinem der Ansprüche 9 bis 11, **dadurch gekennzeichnet, dass** das Mittel zur Bestimmung (3, 12) des Wahrscheinlichkeitswertes einer gegebenen Sequenzeinstellung die Zeitdauer des Dokumentes, wobei die Zeitdauer des Dokumentes aus einer Information besteht, die das Gerät empfangen hat, und die wahl der ausgewählten Sequenzeinstellung als Anfang oder Ende des Dokumentes berücksichtigt; wenn die Zeitdauer zwischen der gegebenen Sequenzeinstellung und der ausgewählten Sequenzeinstellung gleich der Zeitdauer des Dokumentes ist, wird der wahrscheinlichkeitswert der gegebenen Sequenzeinstellung erhöht.

13. Audiovisuelles Gerät (1) nach irgendeinem der Anspruche 9 bis 12, **dadurch gekennzeichnet, dass** in dem erzeugten Anzeigemenu die Sequenzidentifikatoren in einer Reihenfolge angezeigt werden, die von ihren jeweiligen Wahrscheinlichkeitswerten abhängt.

14. Audiovisuelles Gerät (1) nach irgendeinem der Ansprüche 9 bis 12, **dadurch gekennzeichnet, dass** in dem erzeugten Anzeigemenu der Identifikator der Sequenzeinstellung mit dem größten Nahrscheinlichkeitswert in grafisch unterschiedlicher Weise dargestellt wird.
